# EUROPÄISCHE PATENTSCHRIFT

(11) **EP 1 754 872 B1**
(45) Veröffentlichungstag und Bekanntmachung des Hinweises auf die Patenterteilung: **05.03.2008**
(21) Anmeldenummer: 05107545.5
(22) Anmeldetag: 17.08.2005
(51) Int. Cl.: F02D 13/02, F02B 27/00, F02B 41/04

(54) **Ottomotor mit variabler Ventilsteuerung und einem Betrieb im Atkinsonzyklus**
Otto engine with variable valve actuation and Atkinson cycle operation
Moteur Otto avec soupapes à commande variable et fonctionnenment à cycle Atkinson

(43) Veröffentlichungstag der Anmeldung: 21.02.2007
(73) Patentinhaber: Ford Global Technologies, LLC, Dearborn, MI 48126 (US)
(72) Erfinder: Lenz, Ingo, 50858 Koeln (DE); Phlips, Patrick Joseph, 50858 Koeln (DE); Brinkmann, Franz, 50354 Hürth-Efferen (DE); Biundo, John, MI 48088 Warren (US); Boggs, David, MI 48301 Bloomfield Hills (US)
(74) Vertreter: Drömer, Hans-Carsten

(56) Entgegenhaltungen:
- EP-A- 1 338 777
- EP-A- 1 342 897
- LURIA D ET AL: "THE OTTO-ATKINSON ENGINE - A NEW CONCEPT IN AUTOMOTIVE ECONOMY" SAE TECHNICAL PAPER SERIES 820352, SOCIETY OF AUTOMOTIVE ENGINEERS, WARRENDALE, PA, US, 1982, Seiten 1-7, XP008006454 ISSN: 0148-7191
- BOGGS D L ET AL: "THE OTTO-ATKINSON CYCLE ENGINE-FUEL ECONOMY AND EMISSIONS RESULTS AND HARDWARE DESIGN" SAE TECHNICAL PAPER SERIES 950089, SOCIETY OF AUTOMOTIVE ENGINEERS, WARRENDALE, PA, US, 1995, Seiten 220-232, XP008006455 ISSN: 0148-7191
- BLAKEY S C ET AL: "A DESIGN AND EXPERIMENTAL STUDY OF AN OTTO ATKINSON CYCLE ENGINE USING LAT EINTAKE VALVE CLOSING" SAE TECHNICAL PAPER SERIES 910451, SOCIETY OF AUTOMOTIVE ENGINEERS, WARRENDALE, PA, US, 1991, Seiten 1-9, XP008006456 ISSN: 0148-7191

## Beschreibung

Die vorliegende Erfindung betrifft einen Ottomotor mit variabler Ventilsteuerung und einem Betrieb im Atkinsonzyklus gemäß dem Oberbegriff des Patentanspruches 1.

Unter der Bezeichnung "Atkinsonzyklus" bzw. "Atkinsontakt" ist eine Steuerungstechnik für Ottomotoren bekannt, durch welche die Motoreffizienz gesteigert werden kann. Eine Definition und Analyse eines Otto-Atkinsontaktes, der ein variables Schließen der Einlaßventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In einer einfachen Form erfordert der Atkinsontakt lediglich ein erhöhtes Kompressionsverhältnis und ein spätes Schließen der Einlaßventile (vgl. Blakey, S., et al., "A Design and Experimental Study of an Otto Atkinson Cycle Engine Using Late Intake Valve Closing", SAE Technical Paper 910451). Der Atkinsonzyklus wird bei Verbrennungsmotoren nach dem Stand der Technik insbesondere zur Effizienzsteigerung im Volllastbereich eingesetzt. Die Verwendung eines Atkinsonzyklus ist auch bei speziellen Verbrennungsmotoren zur Verwendung in Hybridfahrzeugen bekannt, bei denen der Verbrennungsmotor stets in relativ eng vorgegebenen Motorbetriebsparameterbereichen arbeiten kann.

Weitere Ottomotoren, die im Atkinsonzyklus betrieben werden können, sind z.B. in der EP 1 338 777 A1 und in der EP 1 342 897 A1 offenbart.

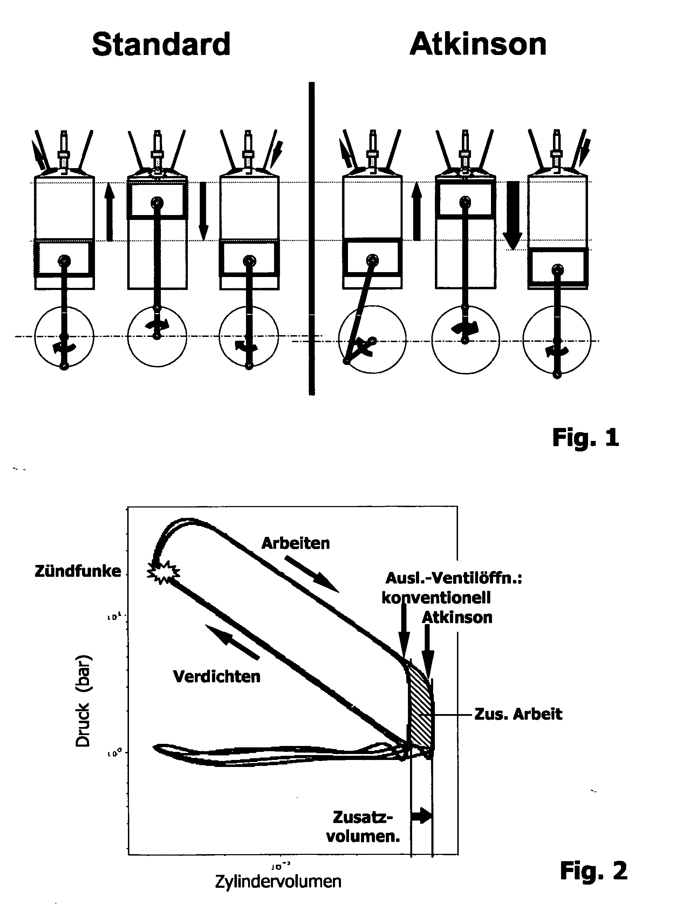

Das Prinzip des Atkinsonzyklus in seiner einfachen Form wird nachfolgend anhand der Figuren 1 und 2 näher erläutert. Figur 1 zeigt im linken Bereich einen Viertakt-Ottomotor in einem konventionellen Betriebsmodus; im rechten Bereich sind die jeweils entsprechenden Phasen in einem Atkinsonzyklus dargestellt.

Die jeweils erste Zylinderdarstellung von links zeigt den Zylinder zum Zeitpunkt des Schließens der Einlaßventile. Ein wesentliches Merkmal des Atkinsonzyklus besteht darin, daß sich der Kolben zu diesem Zeitpunkt nicht am unteren Totpunkt (BDC) befindet, sondern bereits dahinter, so daß ein Teil des über das geöffnete Einlaßventil angesaugten Gemisches wieder in den Einlaßkanal zurück befördert wird. Dieses späte Schließen der Einlaßventile ermöglicht es, den Expansionszyklus (vgl. dritte Darstellung von links) über ein größeres Volumen durchzuführen, wodurch ein verbesserter thermodynamischer Wirkungsgrad erzielt wird. Hierdurch ist das effektive Verdichtungsverhältnis (d. h. das von dem Kolben verdrängte Volumen ab dem Schließzeitpunkt des Einlaßventils) gegenüber dem Expansionsverhältnis reduziert, wobei gleichzeitig der (maximale) Kompressionsdruck, der durch die Klopfneigung des verwendeten Kraftstoffes begrenzt ist, gegenüber einem konventionell betriebenen Motor im Wesentlichen beibehalten wird, vgl. die jeweils mittlere Darstellung in Figur 1. Ein Ottomotor mit Atkinsonbetrieb erfordert einen größeren geometrischen Hubraum und somit ein höheres geometrisches Kompressionsverhältnis als ein konventioneller Motor gleicher Leistung. Der Ablauf eines Atkinson-Zyklus ist in einem logarithmischen Druckdiagramm abhängig von dem Zylindervolumen qualitativ in Figur 2 dargestellt. Die durch das vergrößerte Expansionsvolumen erzielte Arbeit ist schraffiert gekennzeichnet.

Eine weitere grundsätzlich bekannte Maßnahme zur Erhöhung der Kraftstoffeffizienz ist der Einsatz einer variablen Nockenwellensteuerung. Bei der Nockenwellensteuerung handelt es sich um eine bekannte Technologie, die zunehmend bei Benzinmotoren mit doppelten oben liegenden Nockenwellen eingesetzt wird und mittlerweile auch im Kleinwagensegment wirtschaftlich einsetzbar ist.

Mittels der variablen Nockenwellensteuerung wird u.a. versucht, die konventionelle Drosselklappen-Laststeuerung zu ersetzen, da diese relativ hohe Strömungsverluste (nachfolgend als "Pumpverluste" bezeichnet) mit sich bringt. Ein derartiger Betrieb eines Ottomotors ohne Drosselklappen kann beispielsweise über mechanische Ventilstellglieder mit einer hohen Flexibilität hinsichtlich der Öffnungs- und Schließzeitpunkte sowie des Ventilhubes erfolgen. Die Steuerung der Zylinderfüllung über den Ventilhub erfordert dabei jedoch eine große mechanische Präzision in der Ausführung, damit es bei kleinen Hüben nicht zu Ungleichheiten zwischen den verschiedenen Zylindern kommt. Diese Anforderungen verteuern die entsprechenden Systeme, verkomplizieren ihre Wartung und erhöhen die Störanfälligkeit.

Unter Kostenaspekten strebt man weiterhin an, Motorenfamilien mit Motoren unterschiedlicher Leistung zu konzipieren, die in Entwicklung, Herstellung und Wartung möglichst große Ähnlichkeiten aufweisen.

Vor diesem Hintergrund bestand eine Aufgabe der vorliegenden Erfindung darin, einen besonders kostengünstigen Ottomotor mit verbesserter Kraftstoffökonomie und vorteilhaften Drehmomenteigenschaften zu entwickeln, bei dessen Entwicklung auf ein leistungsstärkeres Mitglied einer Motorenfamilie zurückgegriffen werden kann.

Die Lösung der vorgenannten Aufgabe erfolgt anhand der Merkmale des Patentanspruches 1.

Vorteilhafte Ausgestaltungen der Erfindung sind in den Unteransprüchen beschrieben.

Ein Merkmal der Erfindung, das auch unabhängig von den übrigen Merkmalen der Erfindung eingesetzt werden kann, besteht darin, daß der Verbrennungsmotor - vorzugsweise über seinen gesamten Betriebsbereich, d.h. Leerlauf, Teillast, Volllast - in einem Atkinsonzyklus betrieben wird. Hierzu ist die Einlaßventilsteuerung bevorzugt derart ausgebildet, daß das Schließen der Einlaßventile stets erst im Kompressionstakt jeweils deutlich nach dem unteren Totpunkt des Zylinderkolbens erfolgt. Dadurch, daß der Motor stets im Atkinsonbetrieb betrieben werden kann, kann dieser mit einem konstanten erhöhten geometrischen Kompressionsverhältnis betrieben werden, so daß aufwendige Einrichtungen, z. B. zur Kolbenhubverstellung, nicht erforderlich sind.

Ein weiteres Merkmal der Erfindung, das auch unabhängig von dem weiteren Merkmal der Erfindung eingesetzt werden kann, besteht darin, daß eine Laststeuerung durch eine Veränderung des Schließzeitpunktes der Einlaßventile erfolgt, wobei zur Verringerung der abgegebenen Last der Einlaßventilschließzeitpunkt nach spät verschoben wird bzw. zur Erhöhung der abgegebenen Last nach früh verschoben wird. Dabei verbleibt der Einlaßventilschließzeitpunkt in der Regel deutlich hinter dem unteren Totpunkt, so daß der Atkinsonzyklus aufrechterhalten bleibt. Durch die weitere Spätverstellung des Einlaßventilschließens wird ein zunehmend größerer Teil des eingelassenen Gemischs in den Ansaugkanal zurück befördert, so daß dieser Teil am Verbrennungsprozeß nicht teilnimmt. Die hierbei auftretenden Strömungsverluste sind - verglichen mit den Pumpverlusten an einer Drosselklappe - gering, so daß die Pumparbeit des Motors verringert wird.

Das Maß der hierdurch erzielbaren Laststeuerung reicht in der Regel nicht aus, um auf eine konventionelle Drosselklappe verzichten zu können, jedoch kann der Drosselungsgrad durch die Drosselklappe verringert werden, wodurch die Pumpverluste reduziert werden.

In einer bevorzugten Ausführungsform der Erfindung liegt der Schließzeitpunkt des Einlaßventils in einem Bereich von 40 ° bis 160 °, bevorzugt in einem Bereich von mehr als 80 ° bis 130 ° Kurbelwellenwinkel hinter dem unteren Totpunkt der Kolbenbewegung.

Die Verstellung des Einlaßventilschließzeitpunktes erfolgt bevorzugt mittels einer phasenverstellbaren Einlaßventilnockenwelle, d. h. einer Verstellung des Öffnungs- und Schließzeitpunktes sämtlicher Einlaßventile, wobei das Auslaßventil-timing in einer Ausführungsform der Erfindung jeweils unverändert bleibt. Das Auslaßventil-Timing kann alternativ im Hinblick auf einen optimierten Verbrennungsprozeß ebenfalls variiert werden; insbesondere ist eine gleichförmige Verstellung des Auslaßventiltimings mit dem Einlaßventiltiming möglich.

Im Rahmen der Erfindung sind auch andere Verstelleinrichtungen denkbar, so z. B. Verstellmechanismen, bei denen die Einlaßventilschließzeiteinstellung unabhängig von der Einlaßventilöffnungszeiteinstellung erfolgen kann. Es ist auch denkbar, daß die einzelnen Ventile mittels individueller Aktuatoren gesteuert werden, was eine maximale Steuerungsflexibilität gewährleistet. Die Erfindung kann auch bei Ottomotoren eingesetzt werden, die pro Zylinder jeweils mehrere Einlaß- und/oder Auslaßventile aufweisen.

Ein weiteres Merkmal der vorliegenden Erfindung, das auch unabhängig von den vorstehenden Merkmalen eingesetzt werden kann, besteht darin, daß das Ansaugsystem strömungsdynamisch derart dimensioniert ist, daß das drehzahlabhängige Maximum des Liefergrades, das als "dynamische Überhöhung" bezeichnet wird, erst bei einer Motordrehzahl erreicht wird, die oberhalb der Nenndrehzahl des Motors liegt, so daß diese dynamische Überhöhung nicht zum Tragen kommt.

Dem liegen folgende Überlegungen zugrunde: Der Liefergrad, d.h. das Verhältnis der tatsächlich erreichten Zylinderfüllung bezogen auf die geometrisch mögliche Zylinderfüllung, verändert sich über den Drehzahlbereich des Motors und hat aufgrund von Resonanzeffekten ein lokales Maximum ("dynamische Überhöhung"). Die Ansaugsysteme konventioneller Motoren sind häufig so ausgelegt, daß die dynamische Überhöhung im oberen Drehzahlbereich liegt, um dort die Leistungs- und Drehmomententfaltung des Motors zu unterstützen. Im Rahmen der Erfindung hat es sich jedoch als zweckmäßig herausgestellt, das Ansaugsystem so auszulegen, daß die dynamische Überhöhung außerhalb des nutzbaren Drehzahlbereichs, d.h. oberhalb der Nenndrehzahl auftritt, typischerweise bei etwa 20% oberhalb der Nenndrehzahl oder bei Drehzahlen oberhalb von etwa 7000 U/min. Dadurch wird einer zu starken Füllung und damit einer zu hohen Verdichtung im oberen Drehzahlbereich entgegengewirkt und somit gewährleistet, daß der Verbrennungsprozeß auch in diesem Drehzahlbereich stets unterhalb der Klopfgrenze stattfinden kann. Dadurch werden - im Gegensatz zu konventionellen Motoren - Maßnahmen zur Verhinderung eines Klopfens - wie z. B. eine zusätzliche Drosselung - überflüssig, was wiederum die Kraftstoffökonomie verbessert.

Die Drehzahl, bei der die dynamische Überhöhung auftritt, hängt, wie dem Fachmann allgemein bekannt ist, in relativ komplexer Weise von der Ansaugsystemgeometrie ab. Im Rahmen einer bevorzugten Ausführungsform der Erfindung wird vorgeschlagen, das Ansaugsystem in der Länge signifikant zu verkürzen, was in der Regel zu einem Anstieg der Drehzahl, bei der die dynamische Erhöhung auftritt, führt. Darüber hinaus sind im Rahmen der Erfindung auch andere Maßnahmen möglich, um die Resonanzeigenschaften des Ansaugsystems anzupassen, z.B. eine Veränderung des Durchmessers und/oder des Profils des Ansaugkanals.

Die vorliegende Erfindung läßt sich besonders vorteilhaft im Rahmen eines Konzeptes für eine Motorenfamilie einsetzen, indem ein konventionell betriebener Motor mit vergleichsweise größerer Nennleistung und größerem Hubraum im Hinblick auf die Erfindung modifiziert wird, um so einen Motor mit geringerer Nennleistung zu erhalten. Hierzu sind lediglich relativ geringfügige Modifikationen erforderlich, so die Erhöhung des geometrischen Kompressionsverhältnisses, die Änderung der Hubkurve der Einlaßventile sowie der Ansauggeometrie. Ferner ist eine Verstellmöglichkeit wenigstens für den Einlaßventilschließzeitpunkt erforderlich. Der größere Hubraum des größeren Motorenfamilienmitgliedes wird für den vergrößerten Expansionstakt des Atkinsonzyklus genutzt, so daß die Zylindergeometrie gleich bleiben kann. Hierdurch werden mehrere Vorteile erzielt: Zum einen kann auf einheitliche Komponenten, insbesondere einen gleichen Motorblock für verschiedene Motormodelle zurückgegriffen werden. Da die Motoren einer Motorenfamilie im unteren und mittleren Leistungsbereich in der Regel gleiche äußere Abmessungen aufweisen, ist der größere geometrische Hubraum bei dem erfindungsgemäßen Motor hinsichtlich der Fertigungskosten nicht von Nachteil, da dieser aufgrund der größeren Hubraums größere Hohlräume enthält, und somit der Materialeinsatz nicht größer ist als bei einem Motor mit kleinerem Hubraum. Ferner arbeitet der erfindungsgemäße Motor aufgrund des Atkinsonbetriebs und der Einlaßventil-Laststeuerung besonders sparsam, was insbesondere im unteren Fahrzeugsegment von Bedeutung ist. Ferner hat sich herausgestellt, daß mit einem Motor gemäß der vorliegenden Erfindung ein im Vergleich zu konventionell im Atkinsonzyklus betriebenen Ottomotoren vergrößerter einsetzbarer Drehmoment/Lastbereich sowie ein vorteilhafter Volllast-Drehmomentverlauf erzielt werden kann.

Die vorliegende Erfindung wird bevorzugt bei einem Viertakt-Ottomotor eingesetzt, auf den sich auch die nachfolgende Beschreibung bezieht. Es ist darüber hinaus jedoch auch denkbar, das erfindungsgemäße Konzept bei einem Zweitakt-Ottomotor einzusetzen, sofern bei diesem geeignete Maßnahmen zur selektiven Steuerung des Gemischeinlasstimings zur Verfügung stehen.

Neben dem Einsatz bei einem Vergaser-Verbrennungsmotor oder einem Motor mit Saugrohreinspritzung kann das erfindungsgemäße Konzept auch bei einem Motor mit Direkteinspritzung realisiert werden. In diesem Falle wird bei der verlängerten Einlaßphase des Atkinsonzyklus lediglich Ansaugluft in den Einlaßkanal zurückgeschoben.

Im Folgenden wird die Erfindung anhand der Figuren beispielhaft näher erläutert. Es zeigen:
- Figur 1: eine schematische Darstellung verschiedener Zylinderzustände eines konventionellen Verbrennungszyklus im Vergleich zu einem Atkinsonzyklus;
- Figur 2: ein Druck/Zylindervolumendiagramm zur Erläuterung des Prinzips eines Atkinsonzyklus;
- Figur 3: ein Zylinderdruck/Volumendiagramm mit einem Zylinderdruckverlauf für ein Motorbetriebsverfahren gemäß der Erfindung im Vergleich zu Druckverläufen für konventionelle Motorbetriebsverfahren;
- Figur 4: ein Diagramm des drehzahlabhängigen Liefergradverlaufs für verschiedene Motorkonzepte;
- Figur 5: ein Drehmoment/Drehzahl-Diagramm für einen erfindungsgemäßen Ottomotor, und
- Figur 6: eine schematische Darstellung des Ventiltimings für einen erfindungsgemäßen Ottomotor.

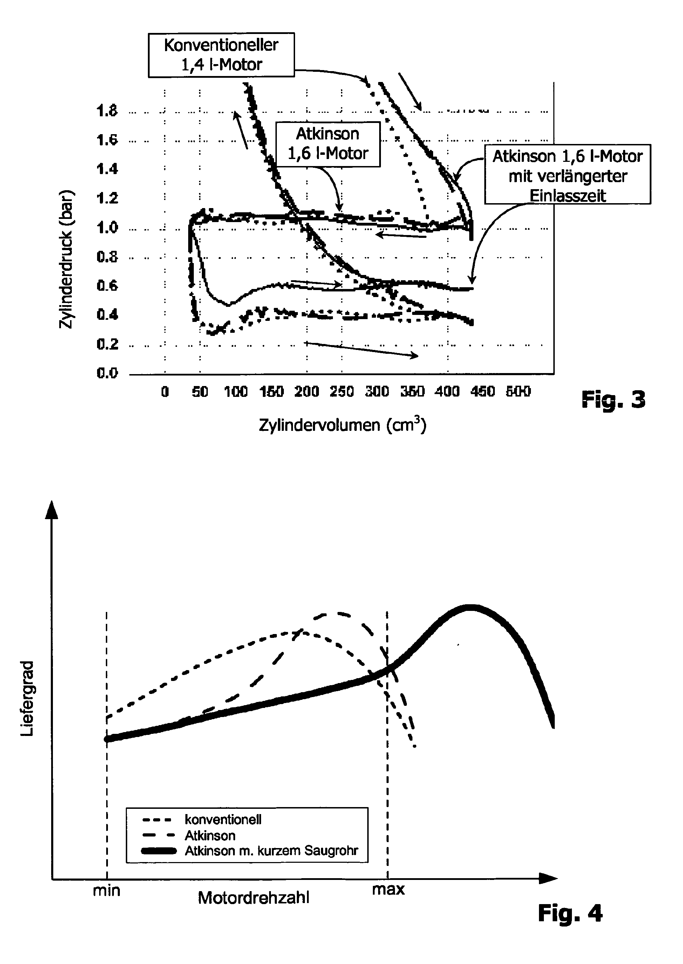

In Figur 3 ist der Druckverlauf im Verlauf eines Verbrennungszyklus für einen Viertakt-Ottomotor abhängig vom aktuellen Zylindervolumen für verschiedene Motorbetriebsverfahren in einem Druckbereich bis 2 bar dargestellt. Die gepunktete Linie zeigt den Druckverlauf für einen konventionell betriebenen Verbrennungsmotor mit einem Hubraum von 1,4 Liter. Demgegenüber zeigt die gestrichelt gezeichnete Linie einen Motor mit einem (geometrischen) Hubraum von 1,6 Liter im Atkinsonbetrieb, wobei aufgrund des verringerten effektiven Ansaugvolumens die Leistung dieses Motors in etwa der des konventionellen 1,4-Liter-Motors entspricht. Wie aus dem Diagramm ersichtlich, geht die Druckkurve des Atkinson-Motors im Ansaugtakt (unten) von einem höheren Zylindervolumen aus, wobei dann beim Arbeitstakt auch eine Expansionsarbeit über einen weiteren Weg geleistet wird (siehe Kurvenverlauf im Diagramm rechts oben). In dem dargestellten Ausführungsbeispiel ist das Kompressionsverhältnis von etwa 11 bei einem konventionellen Motor auf 12,3 beim Atkinsonmotor erhöht. Die tatsächlichen Werte für das für den Atkinsonzyklus modifizierte Kompressionsverhältnis hängen von verschiedenen Parametern ab, u.a. dem verwendeten Kraftstoff und der damit einhergehenden Klopfneigung und dem Verhältnis zwischen dem effektiven Ansaugvolumen und dem Expansionsvolumen. So ist bei einem RON-91-Kraftstoff eine Erhöhung des Kompressionsverhältnisses von typischerweise 9,7 auf etwa 10,8 möglich; bei einem RON-95-Kraftstoff von 11 auf 12,3. Die Grenzwerte für die im Rahmen der Erfindung verwendbaren Kompressionsverhältnisse liegen bei etwa 13 bis 14:1. Gegenüber einem vergleichbaren Motor ohne Atkinsonbetrieb ergibt sich eine Vergrößerung des geometrischen Kompressionsverhältnisses von etwa 5 % bis 17 %.

Da, wie aus Figur 3 ersichtlich, das effektive Ansaugvolumen aufgrund des verzögerten Einlaßventilschließens bei konventionellem Motor und Atkinsonmotor in etwa gleich ist, ergeben sich auch vergleichbare Pumpverluste an der Drosselklappe. Diese Pumpverluste lassen sich dadurch reduzieren, daß eine Laststeuerung über eine Spätverstellung der Einlaßventile vorgenommen wird. Bei einer vom Fahrer vorgegebenen Lastanforderung kann hierdurch der Drosselungsgrad an der Drosselklappe zumindest reduziert werden, was die Pumpverluste verringert. Eine entsprechende Druckverlaufskurve für einen 1,6-Liter-Atkinsonmotor mit verlängerter Einlaßzeit ist mit einer durchgezogenen Linie in Figur 3 dargestellt. Da durch die ventilbedingte Lastregelung die Drosselung geringer ausfallen kann, liegt die Ansaugkurve für diesen Motor auf einem höheren Druckniveau (d.h. einem geringeren Unterdruckniveau); im Beispiel bei etwa 0,6 bar anstelle von 0,4 bar. Hierdurch werden die Pumpverluste vermindert. Im weiteren Verlauf des Verbrennungszyklus verhält sich die Druckkurve in etwa wie die des Atkinsonmotors ohne Lastreduktion.

In Figur 4 ist der Liefergrad, d.h. das Verhältnis von tatsächlich eingelassenem Gemischvolumen zum geometrischen Gesamtvolumen, abhängig von der Motordrehzahl qualitativ für verschiedene Motortypen dargestellt. Bei einem konventionellen Motor mit üblichem Saugrohr ergibt sich eine dynamische Überhöhung mit einem Maximum im oberen nutzbaren Drehzahlbereich. Dieser Effekt ist, wie aus der lang gestrichelt dargestellten Kurve in Figur 4 ersichtlich, bei einem Atkinsonmotor mit demselben Ansaugsystem deutlich stärker ausgeprägt, was mit den insgesamt kürzeren Einlaßphasen in Zusammenhang steht. Die sehr stark ansteigende dynamische Überhöhung führt zu einer zu starken Luftzufuhr im oberen Drehzahlbereich, so daß eine die Pumpverluste vergrößernde zusätzliche Drosselung erforderlich ist, um ein Motorklopfen zu vermeiden. Aus diesem Grund wird bei dem erfindungsgemäßen Motor das Liefergradmaximum aus dem nutzbaren Drehzahlbereich herausgelegt, so daß sich in dem nutzbaren Drehzahlbereich ein relativ flacher Liefergradverlauf ergibt.

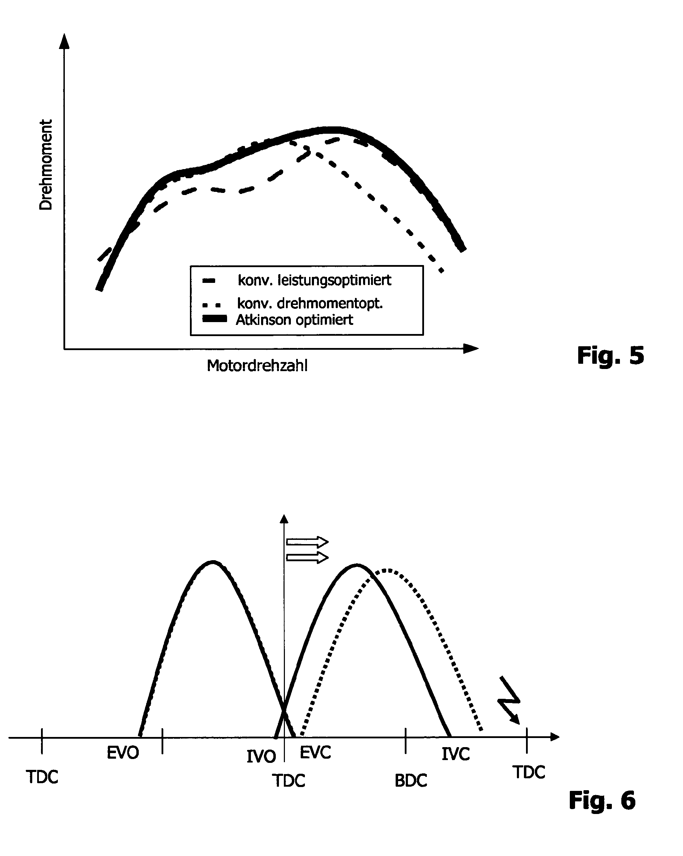

Durch diese Maßnahmen wird, wie in Figur 5 qualitativ dargestellt, bei dem erfindungsgemäßen Motor ein relativ großer nutzbarer Drehmoment-/Lastbereich erzielt, wobei auch der dargestellte Volllast-Drehmomentverlauf besonders günstig ist, da dieser im unteren Drehzahlbereich einem drehmomentoptimierten, hubraumkleineren konventionellen Motor und im oberen Drehzahlbereich einem leistungsoptimierten konventionellen Motor entspricht.

In Figur 6 ist ein mögliches Ventiltiming für einen erfindungsgemäßen Ottomotor qualitativ dargestellt. Der Ottomotor (nicht dargestellt) verfügt über zwei Nockenwellen für die Einlaß- und Auslaßventile, wobei die Einlaßventile über eine im Stand der Technik allgemein bekannte Phasenverstellungseinrichtung in ihrem Timing veränderbar sind. Die Phasenverstellung erfolgt abhängig von den jeweiligen Fahreranforderungen auf der Basis von Steuersignalen einer mikroprozessorgesteuerten Motorsteuerung, wobei die Steuersignale auf entsprechende Aktuatoren wirken. Im Rahmen der Erfindung erfolgt eine Spätverstellung des Einlaßtimings zu Zwecken der Laststeuerung. Hierzu wird die Einlaßkurve (IVO = Einlaßventilöffnungszeitpunkt, IVC = Einlaßventilschließzeitpunkt) von dem durchgezogen gezeichneten Ausgangswert nach rechts verschoben, wobei der Einlaßventilschließzeitpunkt stets deutlich hinter dem unteren Totpunkt (BDC) der Kolbenbewegung liegt. Die dargestellte Verschiebung erfolgt, sofern eine Drosselung des Motors erforderlich ist, also in dem überwiegenden Teil aller Betriebszustände einschließlich des Leerlaufsbetriebszustandes. Im Volllastbereich entspricht das Einlaßventiltiming in etwa der durchgezogenen Linie. Die Motorsteuerung berechnet jeweils, welche Lastminderung durch die Einlaßventilzeitverstellung aktuell erreichbar ist. Die zusätzlich erforderliche Lastminderung wird dann durch Einstellung einer elektronischen Drosselklappe bewirkt.

## Patentansprüche

1. Ottomotor mit einem Ansaugsystem und einer Mehrzahl von Zylindern mit jeweils den Zylindern zugeordneten Einlaß- und Auslaßventilen mit einer Ventilverstelleinrichtung, mittels derer wenigstens der Schließzeitpunkt der Einlaßventile veränderbar ist, wobei der Motor zum Betrieb in einem Atkinsonzyklus ausgebildet ist, bei dem ein Schließen der Einlaßventile nach dem unteren Totpunkt der Kolbenbewegung im Verdichtungstakt derart erfolgt, daß das Expansionsverhältnis gegenüber dem Verdichtungsverhältnis vergrößert ist, wobei
wenigstens in bestimmten Motorbetriebsparameterbereichen eine Laststeuerung durch eine Veränderung des Schließzeitpunktes der Einlaßventile erfolgt, wobei zur Verringerung der abgegebenen Last der Einlaßventilschließzeitpunkt nach spät verschoben ist,
**dadurch gekennzeichnet, daß**
das Ansaugsystem strömungsdynamisch derart dimensioniert ist, daß das drehzahlabhängige Maximum bzw. die dynamische Überhöhung des Liefergrades erst bei einer Motordrehzahl auftritt, die oberhalb der Nenndrehzahl des Motors liegt.

2. Ottomotor nach Anspruch 1,
**dadurch gekennzeichnet,**
**daß** dieser im gesamten Drehzahl/Lastbereich ausschließlich mit einem Atkinsonzyklus betrieben wird.

3. Ottomotor nach Anspruch 1 oder 2,
**dadurch gekennzeichnet, daß**
der veränderliche Schließzeitpunkt des Einlaßventils in einem Bereich von 40 ° bis 160 °, bevorzugt mehr als 80 ° bis 130 ° Kurbelwellenwinkel nach dem unteren Totpunkt der Kolbenbewegung liegt.

4. Ottomotor nach mindestens einem der Ansprüche 1 bis 3,
**dadurch gekennzeichnet, daß**
das Ansaugsystem des Motors eine Drosselklappe aufweist, und daß die Laststeuerung sowohl durch eine Veränderung des Einlaßventilschließzeitpunktes als auch durch die Veränderung der Drosselklappenstellung erfolgt.

5. Ottomotor nach Anspruch 4,
**dadurch gekennzeichnet, daß**
die Laststeuerung soweit wie möglich durch eine Veränderung des Einlaßventilschließzeitpunktes erfolgt und daß, falls die Veränderung des Einlaßventilschließzeitpunktes zum Erreichen der vorgegeben Last nicht ausreicht, eine zusätzliche Laststeuerung durch die Drosselklappe erfolgt.

6. Ottomotor nach mindestens einem der Ansprüche 1 bis 5,
**dadurch gekennzeichnet, daß**
die durch die Dimensionierung des Ansaugsystems bedingte Motordrehzahl, bei der die dynamische Überhöhung auftritt, in einem Drehzahlbereich von 5 % bis 50 % oberhalb der Nenndrehzahl des Motors liegt, vorzugsweise bei etwa 20 % oberhalb der Nenndrehzahl oder vorzugsweise oberhalb einer Motordrehzahl von etwa 7000 U/min..

7. Ottomotor nach mindestens einem der Ansprüche 1 bis 6,
**dadurch gekennzeichnet, daß**
das Ansaugsystem gegenüber einem Ansaugsystem eines vergleichbaren konventionellen Ottomotors, bei dem die Drehzahl, bei der die dynamische Überhöhung auftritt, unterhalb der Nenndrehzahl liegt, in der Länge verkürzt ausgebildet ist.

8. Ottomotor nach mindestens einem der Ansprüche 1 bis 7,
**dadurch gekennzeichnet, daß**
das geometrische Kompressionsverhältnis des Motors einen Wert zwischen etwa 9:1 bis etwa 14:1 aufweist, oder daß das geometrische Kompressionsverhältnis gegenüber einem vergleichbaren Motor ohne Atkinsonbetrieb um etwa 5 % bis etwa 17 % vergrößert wird.

9. Ottomotor nach mindestens einem der Ansprüche 1 bis 8,
**dadurch gekennzeichnet, daß**
dieser eine jeweils den Einlaßventilen zugeordnete Nockenwelle sowie eine jeweils den Auslaßventilen zugeordnete Nockenwelle aufweist, wobei die den Einlaßventilen zugeordnete Nockenwelle ein Verstellglied zum Zwecke einer selektiven Winkelverstellung gegenüber der Kurbelwelle des Motors aufweist, und daß die den Auslaßventilen zugeordnete Nockenwelle entweder ein unveränderliches Timing aufweist oder ebenfalls verstellbar ausgebildet ist, wobei die Verstellung vorzugsweise entsprechend der Einlaßventilverstellung erfolgt.

10. Ottomotor nach mindestens einem der Ansprüche 2 bis 9, **dadurch gekennzeichnet, daß** dieser Bestandteil einer Motorenfamilie von Motoren mit unterschiedlich großem Hubraum ist, und der Ottomotor konstruktiv im Wesentlichen mit einem Motormodell der Motorenfamilie mit größerem Hubraum übereinstimmt, wobei das Modell mit größerem Hubraum nicht zum Betrieb im Atkinson-Zyklus ausgebildet ist.

## Claims

1. Spark ignition engine having an intake system and a plurality of cylinders with inlet and outlet valves respectively assigned to the cylinders, with a valve adjustment device by means of which at least the closing time of the inlet valves can be changed, the engine being designed for operation in the Atkinson cycle in which the inlet valves are closed after the bottom dead center of the piston movement in the compression stroke in such a way that the expansion ratio is increased with respect to the compression ratio, at least in specific engine operating parameter ranges load control being carried out by changing the closing time of the inlet valves, the inlet valve closing time being shifted in the retarded direction in order to reduce the load which is output, **characterized in that** the intake system is dimensioned in terms of flow dynamics in such a way that the rotational-speed-dependent maximum or the dynamic gain in the volumetric efficiency does not occur until an engine speed which is above the rated speed of the engine.

2. Spark ignition engine according to Claim 1, **characterized in that** it is operated exclusively with the Atkinson cycle in the entire rotational speed/load range.

3. Spark ignition engine according to Claim 1 or 2, **characterized in that** the variable closing time of the inlet valve lies in a range from 40° to 160°, preferably more than 80° to 130° crankshaft angle after the bottom dead center of the piston movement.

4. Spark ignition engine according to at least one of Claims 1 to 3, **characterized in that** the intake system of the engine has a throttle valve, and **in that** the load control is carried out both by changing the inlet valve closing time and by changing the throttle valve position.

5. Spark ignition engine according to Claim 4, **characterized in that** the load control is carried out as far as possible by changing the inlet valve closing time, and **in that** if the change in the inlet valve closing time is not sufficient to reach the predefined load, an additional load control is provided by the throttle valve.

6. Spark ignition engine according to at least one of Claims 1 to 5, **characterized in that** the engine speed which is brought about by the dimensioning of the intake system and at which the dynamic gain occurs lies in a rotational speed range from 5% to 50% above the rated speed of the engine, preferably at approximately 20% above the rated speed or preferably above an engine speed of approximately 7000 rpm.

7. Spark ignition engine according to at least one of Claims 1 to 6, **characterized in that** the intake system is embodied with a shortened length compared to an intake system of a comparable conventional spark ignition engine in which the rotational speed at which the dynamic gain occurs is below the rated speed.

8. Spark ignition engine according to at least one of Claims 1 to 7, **characterized in that** the geometric compression ratio of the engine has a value between approximately 9:1 to approximately 14:1, or **in that** the geometric compression ratio is increased by approximately 5% to approximately 17% compared to a comparable engine without the Atkinson operating mode.

9. Spark ignition engine according to at least one of Claims 1 to 8, **characterized in that** said engine has a camshaft which is assigned in each case to the inlet valves and a camshaft which is assigned in each case to the outlet valves, the camshaft which is assigned to the inlet valves having an adjustment element for the purpose of selective angular adjustment compared to the crankshaft of the engine, and **in that** the camshaft which is assigned to the outlet valves either has invariable timing or is also of adjustable design, the adjustment preferably being carried out in accordance with the inlet valve adjustment.

10. Spark ignition engine according to at least one of Claims 2 to 9, **characterized in that** the latter is a component of an engine family of engines with different cubic capacities, and the spark ignition engine corresponds in design terms essentially to an engine model of the engine family with a relatively large cubic capacity, the model with a relatively large cubic capacity not being designed for operating with the Atkinson cycle.

## Revendications

1. Moteur Otto avec un système d'admission et une pluralité de cylindres avec des soupapes d'admission et d'échappement respectivement associées aux cylindres, avec un dispositif de réglage des soupapes, au moyen duquel au moins l'instant de fermeture des soupapes d'admission peut être modifié, le moteur étant réalisé pour fonctionner dans un cycle d'Atkinson, dans lequel une fermeture des soupapes d'admission s'effectue après le point mort bas du mouvement du piston pendant le temps de compression, de telle sorte que le rapport d'expansion soit augmenté par rapport au rapport de compression,
une commande de charge s'effectuant au moins dans des plages de paramètres de fonctionnement du moteur déterminées, par une modification de l'instant de fermeture des soupapes d'admission, l'instant de fermeture des soupapes d'admission étant déplacé de manière retardée pour réduire la charge fournie,
**caractérisé en ce que**
le système d'admission est dimensionné, du point de vue de la dynamique d'écoulement, de telle sorte que le maximum dépendant du régime, ou que la surélévation dynamique du coefficient de rendement se produise seulement à un régime du moteur supérieur au régime nominal du moteur.

2. Moteur Otto selon la revendication 1,
**caractérisé en ce que**
celui-ci fonctionne exclusivement avec un cycle d'Atkinson dans toute la plage de régime/charge.

3. Moteur Otto selon la revendication 1 ou 2,
**caractérisé en ce que**
l'instant de fermeture modifié de la soupape d'admission se situe dans une plage de 40° à 160°, de préférence de plus de 80° à 130° d'angle de vilebrequin après le point mort bas du déplacement du piston.

4. Moteur Otto selon au moins l'une quelconque des revendications 1 à 3,
**caractérisé en ce que**
le système d'admission du moteur présente un papillon d'étranglement et **en ce que** la commande de charge s'obtient à la fois par une modification de l'instant de fermeture de la soupape d'admission et par la modification de la position du papillon d'étranglement.

5. Moteur Otto selon la revendication 4,
**caractérisé en ce que**
la commande de charge s'obtient dans la mesure du possible par une modification de l'instant de fermeture de la soupape d'admission et **en ce que**, si la modification de l'instant de fermeture de la soupape d'admission ne suffit pas à atteindre la charge prédéfinie, il se produit une commande de charge supplémentaire par le papillon d'étranglement.

6. Moteur Otto selon au moins l'une quelconque des revendications 1 à 5,
**caractérisé en ce que**
le régime du moteur dépendant du dimensionnement du système d'admission, auquel se produit la surélévation dynamique, se situe dans une plage de régime de 5 % à 50 % au-dessus du régime nominal du moteur, de préférence à environ 20 % au-dessus du régime nominal, ou de préférence au-dessus d'un régime du moteur d'environ 7000 tubulure de raccordement/min.

7. Moteur Otto selon au moins l'une quelconque des revendications 1 à 6,
**caractérisé en ce que**
le système d'admission est raccourci en longueur par rapport à un système d'admission d'un moteur Otto comparable conventionnel, dans lequel le régime auquel se produit la surélévation dynamique se situe en dessous du régime nominal.

8. Moteur Otto selon au moins l'une quelconque des revendications 1 à 7,
**caractérisé en ce que**
le rapport de compression géométrique du moteur présente une valeur comprise entre environ 9:1 et environ 14:1 ou **en ce que** le rapport de compression géométrique est augmenté d'environ 5 % à environ 17 % par rapport à un moteur comparable sans mode de fonctionnement à cycle Atkinson.

9. Moteur Otto selon au moins l'une quelconque des revendications 1 à 8,
**caractérisé en ce que**
celui-ci présente un arbre à came associé à chaque fois aux soupapes d'admission, ainsi qu'un arbre à came associé à chaque fois aux soupapes d'échappement, l'arbre à came associé aux soupapes d'admission présentant un organe de réglage pour effectuer un réglage angulaire sélectif par rapport au vilebrequin du moteur, et **en ce que** l'arbre à came associé aux soupapes d'échappement soit présente une temporisation non modifiée, soit est également réalisé de manière réglable, le réglage s'effectuant de préférence en fonction du réglage des soupapes d'admission.

10. Moteur Otto selon au moins l'une quelconque des revendications 2 à 9, **caractérisé en ce que** celui-ci fait partie d'une famille de moteurs avec des cylindrées différentes, et le moteur Otto coïncide, de par sa construction, essentiellement avec un modèle de moteur de la famille de moteurs avec une plus grosse cylindrée, le modèle avec la plus grosse cylindrée n'étant pas réalisé en vue d'un fonctionnement en cycle d'Atkinson.
